# EUROPÄISCHE PATENTSCHRIFT

(11) **EP 1 584 404 B1**
(45) Veröffentlichungstag und Bekanntmachung des Hinweises auf die Patenterteilung: **23.01.2008**
(21) Anmeldenummer: 04029935.6
(22) Anmeldetag: 17.12.2004
(51) Int. Cl.: B23K 11/36

(54) **Transformatorgehäuse**
Transformer housing
Boîtier pour un transformateur

(30) Priorität: 05.04.2004 DE 102004017254
(43) Veröffentlichungstag der Anmeldung: 12.10.2005
(73) Patentinhaber: Bosch Rexroth AG, 70184 Stuttgart (DE)
(72) Erfinder: Zlatolas, Marjan, 1291 Skoflsica (SI); Lisjak, Rado, 1000 Ljubljana (SI); Solar, Anton, 4228 Zelezniki (SI); Markelj, Circil, 4227 Selca (SI)

(56) Entgegenhaltungen:
- EP-A- 0 130 276
- WO-A-03/087685

## Beschreibung

Die Erfindung entspringt aus dem Bereich der Widerstandsschweißtechnik zur Verwendung beim Rollnahtschweißen, Buckelschweißen oder Punktschweißen und befasst sich mit der Unterbringung von Komponenten, die zum Betrieb einer Widerstandsschweißanlage erforderlich sind und möglichst innerhalb eines einheitlichen Gehäuses untergebracht werden sollen.

Die DE 103 56 978 zeigt ein Modul einer Widerstandsschweißzange und befasst sich mit der Unterbringung von Komponenten zum Betrieb innerhalb des Schweißzangengehäuses. Die Aufgabe der Erfindung ist es, unter Berücksichtigung der Anforderungen an das Gewicht, eine möglichst effektive Raumausnutzung des vom Schweißroboter geführten Schweißzangengehäuses zu erreichen. Das Schweißzangengehäuse erhält dazu ein Modul. Dieses Modul wiederum umfasst Modulkomponenten, die zur Durchführung des von der Schweißsteuerung überwachten Schweißprozesses relevant sind. Die Zusammenfassung der Modulkomponenten, beispielsweise innerhalb eines weiteren Gehäuses, welches in das Schweißzangengehäuse einzubringen wäre, wird hier nur angedeutet. Auf eine mögliche Ausgestaltung eines solchen Gehäuses wird nicht näher eingegangen.

Die EP 0 130 276 beschreibt eine statische Induktionsvorrichtung. Diese Vorrichtung weist einen Transformator auf, der in einem kastenförmigen Gehäuse mit einer oberen Platte, einer unteren Platte und einer entgegengesetzten Seitenplatte ausgebildet ist. Die Seitenplatten weisen auf ihrer Außenseite Verstärkungsstäbe auf.

Ähnlich ausgebildete Gehäuse sind in der EP 1 352 700 A2, US 2003/0089684, US 2002/0096945, US 4517435, US-A-5166491 und der JP-A-2001-230127 beschrieben.

Die Aufgabe der vorliegenden Erfindung besteht darin, eine möglichst effektive Raumausnutzung mit reduziertem Kosten- und Teileaufwand bei der Unterbringung von Komponenten zu gewährleisten, wobei ein einfach herzustellendes und universelles Gehäuse, insbesondere als Schutz für den Schweißtransformator einer Widerstandsschweißanlage bereitgestellt werden soll.

Realisiert man ein Gehäuse mittels eines säulenförmigen Hohlkörpers zur Ummantelung von Komponenten, so erübrigen sich aufwendige Gehäusekonstruktionen und es verringern sich der Montage- und Kostenaufwand. Gerade bei Verwendung der Ummantelung als Gehäuse für den Schweißtransformator alleine oder in Kombination mit anderen Komponenten bietet sich die erfindungsgemäße Lösung an, da bereits bekannte Transformatorgehäuse aus einem mehrteiligen Edelstahlmantel, aus zwei als Rahmen ausgebildeten Aluminiumgussteilen und aus 4 Bolzen bestehen. Auch der Schutzaspekt wird durch die erfindungsgemäße Lösung besser gelöst als im Stand der Technik, da der Transformator vollständig ummantelt ist. Die Erfindung wird weiter den Forderungen an die Verminderung von Kosten und Teilen gerecht, denn es ist u.a. keine Oberflächenbehandlung bzw. Nachbehandlung des Gehäuses erforderlich. Ebenso wird die Forderung einer möglichst effektiven Raumausnutzung mittels der erfindungsgemäßen Lösung aufgrund der kompakten Form adressiert. Zusätzlich wirkt sich das Hohlkörpergehäuse positiv auf Stabilität und Optik aus.

Erfindungsgemäß ist der säulenförmige Hohlkörper einteilig aus einem rechteckförmigen Stangenpressprofil gefertigt, insbesondere einem Stangenpressprofil aus Aluminium mit oder ohne Beschichtung, zur Optimierung der Wärmeabgabe. Alternativ würde sich noch ein als Druckguss gefertigter Hohlkörper anbieten, der erste Vorschlag ist jedoch zur Zeit preisgünstiger. Hierdurch bildet der Hohlkörper einerseits eine vollständige Umhüllung der Komponenten und andererseits kann eventuell Wärme effektiv abgeleitet und an die Umgebung weitergegeben werden. Mittels der Verwendung von Aluminium kann man ein leichtes, nicht magnetisierbares Gehäuse realisieren, welches zusätzlich noch gegen Korrosion unempfindlich ist. Auch andere geeignete Werkstoffe können selbstverständlich zur Realisierung des Gehäuses herangezogen werden.

Erfindungsgemäß enthält der Hohlkörper in Längsrichtung angebrachte innenseitige Rippen, wodurch die Einpassung von Modulkomponenten wesentlich erleichtert wird.

Erfindungsgemäß weist der Hohlkörper auch außenseitige Rippen zur Aufnahme von Gewindebuchsen oder Befestigungsvorrichtungen auf. Grund: Das Ziehprofil bzw. Stangenpressprofil ist nicht maßhaltig und soll i.d.R. mit möglichst geringem Aufwand, d.h. ohne Nacharbeiten, als Umhüllung eingesetzt werden können. Deshalb wird es mit äußeren Längsrippen versehen, die relativ zur Oberfläche des Ziehprofils erhaben sind und in einem bestimmten Abstand zueinander parallel entlang der Längsrichtung des Gehäuses verlaufen. Es muss somit zur Realisierung einer maßhaltigen Befestigung nicht die gesamte Außenfläche des Gehäuses bearbeitet werden, sondern lediglich die Oberfläche der Längsrippen. Der Bearbeitungsaufwand und der erforderliche Materialabtrag reduziert sich damit erheblich.

Vorteilhafterweise besteht der säulenförmige Hohlkörper aus einer Vielzahl von einzelnen säulenförmigen Hohlkörpern identischen Querschnitts und identischer oder unterschiedlicher Länge, wobei jeder einzelne Hohlkörper ein oder mehrere Komponenten oder Teile von Komponenten umfasst. Somit ist das durch die Ummantelung entstehende Gehäuse selbst wiederum modular bzw. mehrteilig gestaltet und kann je nachdem wie viele Komponenten erforderlich sind flexibel erweitert werden.

Besonders vorteilhaft ist es aber, wenn Hohlkörperkomponenten lösbar mit oder ohne Abdichtung miteinander verbunden sind, um einerseits eine Erweiterbarkeit oder bei fixer Komponentenanzahl eine wasser- und/oder staubdichte Realisierung gewährleisten.

Sind die im Inneren der säulenförmigen Hohlkörper mittels lösbarer oder nicht lösbarer Gehäuseverbindungen montierten Komponenten, wie beispielsweise der Transformator, mit einem Fluid, insbesondere mit Gießharz, vergossen, so erspart man sich bei der Montage eine Abdichtung der Stirnseiten des Hohlkörpers sowie weitere Abdichtmaßnahmen, wie sie bei herkömmlichen Transformatorgehäusen erforderlich waren. Das Hohlkörpergehäuse übernimmt praktisch die Aufgabe einer Form, in die der Trafo mittels Gießharz eingebettet ist. Etwaige Abdeckplatten, Abdichtungen oder Nacharbeiten wegen evtl. aus dem Gehäuse herausgetretenem Gießharz entfallen. Komponenten im Gehäuse sind optimal gegen äußere Einwirkungen wie Feuchtigkeit, Dämpfe, Schmutz, Säuren, etc. geschützt und die Wärmeabfuhr ist optimiert.

Wenn die Ummantelung eine Wasserkühlung umfasst, lässt sich ggf. in Kombination mit der Trafo-Wasserkühlung die Kühlwirkung auf die innenliegenden Komponenten, inklusive der Trafokomponenten, bei Bedarf verbessern.

Würde das Gehäuse vorteilhafterweise eine Komponente zur Zusammenführung und Weiterleitung von Schweißzangensignalen und Signalen der Trafosensorik umfassen, so könnte diese Komponente als Input-/Ouptut-Einheit bzw. Schnittstelle zu einer extern angeschlossenen Steuerung bzw. Leistungsregelung dienen und wäre ggf. in unmittelbarer Nähe des signalliefernden Transformators untergebracht.

Ganz besonders vorteilhaft wäre es, wenn eine Komponente eine zumindest teilweise integrierte Vorrichtung zur Durchführung von Ultraschallmessungen zu Zwecken der Prüfung von Schweißverbindungen und/oder zur Regelung des Schweißvorganges ist. Diese Vorrichtung ließe sich dann leicht zusammen mit weiteren Komponenten in der Nähe der Schweißzangen, welche die signalerzeugenden Ultraschallsender tragen, unterbringen.

Wird die Ummantelung so ausgestaltet, dass sie zumindest teilweise oder auch vollständig einen integrierten Umrichter (oder nur das Leistungsteil) mit oder ohne Gleichrichter zur primärseitigen Versorgung eines MF-Transformators umfasst, dann wäre neben der reinen MF-Trafofunktion auch dessen Energiequelle innerhalb des Gehäuses und damit in der Nähe des Transformators untergebracht.

Ein weiterer Vorteil ergäbe sich durch die zumindest teilweise Unterbringung von Vorrichtungen zur Regelung des Schweißstromes im Gehäuse bzw. innerhalb der Ummantelung, so dass der erforderliche Platzbedarf im Schaltschrank bzw. Schweißkoffer reduziert werden kann.

Auch könnte eine Komponente zur Auswertung der Sensoren von Schweißzangenmotoren und/oder deren Ansteuerung zur Kraft- und Lageregelung in die Ummantelung integriert werden, dies würde einen weiteren Beitrag zur Modularität der Gesamtanordnung beitragen und alle zur Nutzung der Schweißzangen erforderlichen Komponenten an einem zentralen Montageort ohne lange Wege vereinen.

Maximale Modularität und Platzeinsparung wäre dann gewährleistet, wenn eine Komponente in der Ummantelung eine zumindest teilweise integrierte Schweißsteuerung ist, um zum Beispiel eine dezentral organisierte Steuerungsarchitektur zu unterstützen.

Selbstverständlich können beliebige Kombinationen der zuvor erwähnten Modulkomponenten je nach Bedarf und Anwendungsfall so kombiniert werden, dass sich eine optimale Ausnutzung des vorhandenen Stauraumes in der Ummantelung ergibt. Besonders nützlich ist die Anordnung immer dann, wenn zusammenagierende Vorrichtungen, wie z.B. der Trafo und die Auswertung der Trafosensorik direkt in der Ummantelung angeordnet sind.

Inwieweit eine vollständige Aufnahme aller zur Durchführung des Schweißprozesses relevanten Komponenten möglich ist, wird in erster Linie von der verwendeten Halbleitertechnologie und den erforderlichen Schweißströmen bestimmt. Theoretisch wäre eine Vollintegration schon jetzt denkbar und machbar.

Es bietet sich außerdem an, die Energieversorgung von Komponenten ebenfalls zu integrieren und über die Netzspannung eine Gleichspannung zu realisieren oder einen extern oder auch intern erzeugten Leistungstakt heranzuziehen. Dies würde einen weiteren Beitrag zur Integration des Gesamtsystems leisten.

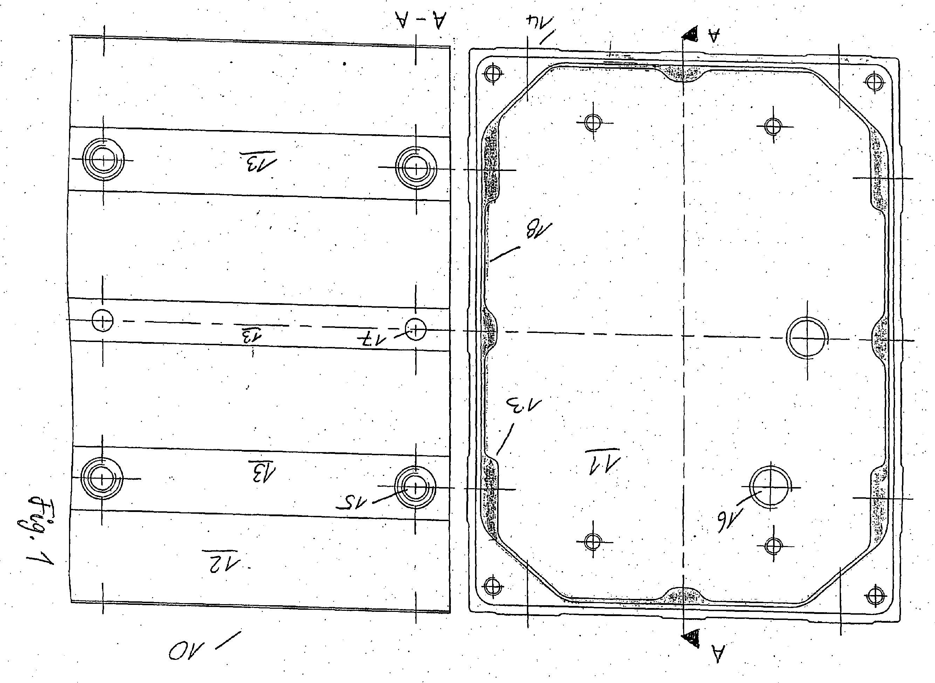

Figur 1 zeigt ein Gehäuse 10, welches mittels eines Stangenpressprofils mit rechteckförmigem Querschnitt realisiert ist. Das Stangenpressprofil besteht aus Aluminium. Auf der rechten Seite der Figur 1 ist ein Längsausschnitt A-A dargestellt, der eine Ansicht auf die innere Gehäusewand mit drei Innenrippen 13 erlaubt. Wie der Schnitt durchgeführt wurde, ist aus der linken Seite der Figur ersichtlich (A-A). Die linke Seite zeigt das Querschnittsprofil 11 des Stangenpressprofils. Des weiteren sind ersichtlich die Innenrippen 13 zur Führung von Modulkomponenten, wie beispielsweise Transformatoren und die Außenrippen 14 zur Aufnahme von Bohrungen (15, 17).

Die Innen- und Außenrippen verlaufen parallel zur Längsachse des Gehäuses in einem bestimmten Abstand zueinander, die äußeren Rippenoberflächen nehmen Bohrungen 15, alternativ auch mit Gewindebuchsen, auf. Diese wiederum dienen der Befestigung von umhüllten Komponenten, wie etwa einem Schweißtransformator mit/ohne Gleichrichter mit/ohne Wasserkühlung. Aus dem Querschnitt links ist deutlich zu ersehen, dass die Oberfläche der Innenrippen 13 gegenüber der Oberfläche der innenseitigen Gehäusewand 18 erhaben sind. Die zusätzlichen, sichtbaren und in den Rippen 13, 14 eingelassenen Bohrungen 17 können ggf. bei der Justierung der Modulkomponenten von außen mittels eines spitzen Gegenstandes genutzt werden, so dass die Gewinde der Modulkomponenten mit den Gewinden bzw. Bohrungen 15 des Modulgehäuses 10 zur Aufnahme von Schrauben fluchten.

Nachdem die Komponenten montiert sind und der Innenraum mit Gießharz vergossen wurde, wird als Deckplatte eine Hartgewebeplatte, z.B. Pertinaxplatte, aufgebracht, welche über Bohrungen 16 eine Einsteckmöglichkeit für Stecker oder Kabel vorsieht.

Es wäre auch denkbar im Inneren des Modulgehäuses 10 eine Wasserkühlung anzubringen, beispielsweise könnten die Kühlrohre parallel zu den Innenrippen 13 entlang der Innenwand 18 verlaufen und ihre Wärme über das Gehäuse 10 an die Umgebung abgeben.

Zur Gewichtsreduzierung würde es sich anbieten zusätzlich noch die äußeren Kanten des Modulgehäuses 10 abzufräsen. Dies ist evtl. auch bei der Anbringung von Typenschildern zweckdienlich.

### Bezugszeichenliste:

- 10: Modulgehäuse
- 11: Querschnittsprofil
- 12: Längsschnitt
- 13: Innenrippen
- 14: Außenrippen
- 15: Bohrungen mit/ohne Gewindebuchsen
- 16: Bohrungen in der Deckplatte
- 17: Arretierungsbohrungen
- 18: Gehäuseinnenwand

## Patentansprüche

1. Vorrichtung zur Ummantelung von Komponenten einer Widerstandsschweißanlage, welche als säulenförmiger Hohlkörper (10) realisiert ist, **dadurch gekennzeichnet, dass** der säulenförmige Hohlkörper (10) ein rechteckförmiges Stangenpressprofil ist oder dass dieser aus Druckguss gefertigt ist, wobei der Hohlkörper (10) in Längsrichtung angebrachte Innenrippen (13) sowie in Längsrichtung angebrachte Außenrippen (14) aufweist.

2. Vorrichtung nach Anspruch 1, zur Ummantelung eines gekühlten Mittelfrequenz-Schweißtransformators mit Gleichrichter.

3. Vorrichtung nach einem der Ansprüche 1 oder 2, **dadurch gekennzeichnet, dass** der Druckguss unter Verwendung eines magnetisch neutralen Materials wie beispielsweise Aluminium gefertigt ist.

4. Vorrichtung gemäß einem der vorhergehenden Ansprüche, **dadurch gekennzeichnet, dass** der Hohlkörper (10) aus einer Vielzahl von einzelnen Hohlkörpern (10) identischen Querschnitts und identischer oder unterschiedlicher Länge gebildet ist, wobei jeder einzelne Hohlkörper (10) ein oder mehrere Komponenten oder Teilkomponenten umfasst.

5. Vorrichtung Anspruch 4, **dadurch gekennzeichnet, dass** die Hohlkörper (10) lösbar mit oder ohne Abdichtung miteinander verbunden sind oder nicht lösbar miteinander verbunden sind.

6. Vorrichtung gemäß einem der vorhergehenden Ansprüche, **dadurch gekennzeichnet, dass** die im Inneren der Hohlkörper (10) mittels lösbarer oder nicht lösbarer Verbindungen montierten Komponenten mit einem Fluid vergossen sind, insbesondere mit Gießharz.

7. Vorrichtung gemäß einem der vorhergehenden Ansprüche, **dadurch gekennzeichnet, dass** der Hohlkörper (10) als Transformatorgehäuse fungiert.

8. Vorrichtung gemäß einem der vorhergehenden Ansprüche, **dadurch gekennzeichnet, dass** das der Hohlkörper (10) eine Wasserkühlung umfasst.

9. Vorrichtung gemäß einem der vorhergehenden Ansprüche, **dadurch gekennzeichnet, dass** eine Komponente zur Zusammenführung und Weiterleitung von Schweißzangensignalen und Signalen der Trafosensorik dient.

10. Vorrichtung gemäß einem der vorhergehenden Ansprüche, **dadurch gekennzeichnet, dass** eine Komponente eine zumindest teilweise integrierte Vorrichtung zur Durchführung von Ultraschallmessungen zur Prüfung von Schweißverbindungen während des Schweißvorganges ist.

11. Vorrichtung gemäß einem der vorhergehenden Ansprüche, **dadurch gekennzeichnet, dass** eine Komponente ein zumindest teilweise integrierter Umrichter zur primärseitigen Versorgung eines Transformators ist.

12. Vorrichtung gemäß einem der vorhergehenden Ansprüche, **dadurch gekennzeichnet, dass** eine Komponente eine zumindest teilweise integrierte Vorrichtung zur Bereitstellung und Regelung des Schweißstromes ist.

13. Vorrichtung gemäß einem der vorhergehenden Ansprüche, **dadurch gekennzeichnet, dass** eine Komponente zur Auswertung der Sensoren von Schweißzangenmotoren und/oder deren Ansteuerung dient.

14. Vorrichtung gemäß einem der vorhergehenden Ansprüche, **dadurch gekennzeichnet, dass** eine Komponente eine zumindest teilweise integrierte Schweißsteuerung ist.

15. Vorrichtung gemäß einem der vorhergehenden Ansprüche, **dadurch gekennzeichnet, dass** eine Energieversorgung für eine oder mehrere Komponenten umfasst ist.

## Claims

1. Device for the sheathing of components of a resistance welding plant which is implemented as a column-shaped hollow body (10), **characterized in that** the column-shaped hollow body (10) is a rectangular bar extrusion profile, or **in that** it is manufactured from diecasting, the hollow body (10) having inner ribs (13) attached in the longitudinal direction and outer ribs (14) attached in the longitudinal direction.

2. Device according to Claim 1 for the sheathing of a cooled medium-frequency welding transformer with rectifier.

3. Device according to either one of Claims 1 or 2, **characterized in that** the diecasting is manufactured, using a magnetically neutral material, such as, for example, aluminium.

4. Device according to one of the preceding claims, **characterized in that** the hollow body (10) is formed from a multiplicity of individual hollow bodies (10) of identical cross section and of identical or different length, each individual hollow body (10) comprising one or more components or subcomponents.

5. Device according to Claim 4, **characterized in that** the hollow bodies (10) are connected to one another releasably, with or without sealing, or are connected to one another unreleasably.

6. Device according to one of the preceding claims, **characterized in that** the components mounted inside the hollow bodies (10) by means of releasable or unreleasable connections are encapsulated with a fluid, in particular with casting resin.

7. Device according to one of the preceding claims, **characterized in that** the hollow body (10) functions as a transformer housing.

8. Device according to one of the preceding claims, **characterized in that** the hollow body (10) comprises water cooling.

9. Device according to one of the preceding claims, **characterized in that** one component serves for the convergence and transfer of electrode-holder signals and signals from the transformer sensors.

10. Device according to one of the preceding claims, **characterized in that** one component is an at least partially integrated device for carrying out ultrasonic measurements for the testing of welded joints during the welding operation.

11. Device according to one of the preceding claims, **characterized in that** one component is an at least partially integrated converter for the primary-side supply of a transformer.

12. Device according to one of the preceding claims, **characterized in that** one component is an at least partially integrated device for providing and regulating the welding current.

13. Device according to one of the preceding claims, **characterized in that** one component serves for evaluating the sensors of electrode-holder motors and/or the activation of these.

14. Device according to one of the preceding claims, **characterized in that** one component is an at least partially integrated welding control.

15. Device according to one of the preceding claims, **characterized in that** it comprises a power supply for one or more components.

## Revendications

1. Dispositif pour envelopper les composants d'une installation de soudage par résistance, dispositif réalisé par un corps creux (10) en forme de colonne,
**caractérisé en ce que**
le corps, creux (10) en forme de colonne est un profil extrudé à la presse, de section rectangulaire ou est fabriqué en fonte sous pression, et
le corps creux (10) comporte des nervures intérieures (13) dans la direction longitudinale ainsi que des nervures extérieures (14) dans la direction longitudinale.

2. Dispositif selon la revendication 1, pour envelopper un transformateur de soudage moyenne fréquence, refroidi, comportant des redresseurs.

3. Dispositif selon l'une quelconque des revendications 1 ou 2,
**caractérisé en ce que**
la, fonte sous pression est fabriquée en utilisant une matière magnétiquement neutre comme par exemple de l'aluminium.

4. Dispositif selon l'une quelconque des revendications précédentes,
**caractérisé en ce que**
lé corps creux (10) se compose de plusieurs corps creux (10) séparés, de section identique et de longueur identique ou différente, et chaque corps creux (10) séparés entoure un ou plusieurs composants ou parties de composants.

5. Dispositif selon la revendication 4,
**caractérisé en ce que**
les corps creux (10) sont reliés de façon amovible les uns aux autres avec ou sans étanchéité ou sont reliés d'une manière solidaire.

6. Dispositif selon l'une quelconque des revendications précédentes,
**caractérisé en ce que**
les composants installés à l'intérieur des corps creux (10) à l'aide de liaisons amovibles et non amovibles, sont noyés dans un liquide notamment une résine coulée.

7. Dispositif selon l'une quelconque des revendications précédentes,
**caractérisé en ce que**
le corps creux (10) fonctionne comme boîtier de transformateur.

8. Dispositif selon l'une quelconque des revendications précédentes,
**caractérisé en ce que**
le corps creux (10) comporte un refroidissement par eau.

9. Dispositif selon l'une quelconque des revendications précédentes,
**caractérisé en ce qu'**
un composant sert à réunir et à transmettre les signaux de pince de soudage et des signaux de capteur de transformateur.

10. Dispositif selon l'une quelconque des revendications précédentes,
**caractérisé en ce qu'**
un composant est un dispositif au moins en partie intégré pour effectuer des mesures par ultrasons et contrôler les soudures au cours de l'opération de soudage.

11. Dispositif selon l'une quelconque des revendications précédentes,
**caractérisé en ce qu'**
un composant est au moins un redresseur en partie intégré pour l'alimentation côté primaire d'un transformateur.

12. Dispositif selon l'une quelconque des revendications précédentes,
**caractérisé en ce qu'**
un composant est un dispositif au moins en partie intégré pour fournir le courant de soudage et le réguler.

13. Dispositif selon l'une quelconque des revendications précédentes,
**caractérisé en ce qu'**
un composant exploite les capteurs des moteurs des pinces de soudage et/ou leur commande.

14. Dispositif selon l'une quelconque des revendications précédentes,
**caractérisé en ce qu'**
un composant est une commande de soudage au moins en partie intégrée.

15. Dispositif selon l'une quelconque des revendications précédentes,
**caractérisé en ce que**
l'alimentation en énergie comprend un ou plusieurs composants.
